# FASCICULE DE BREVET EUROPEEN

(11) **EP 3 969 330 B1**
(45) Date de publication et mention de la délivrance du brevet: **06.12.2023**
(21) Numéro de dépôt: 20714228.2
(22) Date de dépôt: 31.03.2020
(51) Int. Cl.: B60R 11/04, B60S 1/00

(54) **AGENCEMENT DE MONTAGE D'UN SYSTEME OPTIQUE SUR UN ELEMENT DE CARROSSERIE D'UN VEHICULE**
ANORDNUNG ZUR MONTAGE EINES OPTISCHEN SYSTEMS AN EINEM KAROSSERIEELEMENT EINES FAHRZEUGS
ARRANGEMENT FOR MOUNTING AN OPTICAL SYSTEM ON A BODY ELEMENT OF A VEHICLE

(30) Priorité: 17.05.2019 FR 1905178
(43) Date de publication de la demande: 23.03.2022
(73) Titulaire: A. Raymond et Cie, 38000 Grenoble (FR)
(72) Inventeur: SANCHEZ, Anthony, 38950 SAINT-MARTIN-LE-VINOUX (FR)
(74) Mandataire: IP Trust
(86) Numéro de dépôt international: PCT/EP2020/059082
(87) Numéro de publication internationale: WO 2020/233879

(56) Documents cités:
- EP-A1- 2 873 571
- WO-A1-2018/043743
- US-A1- 2018 345 917

## Description

### DOMAINE DE L'INVENTION

La présente invention concerne un agencement de montage d'un système optique sur un élément de carrosserie d'un véhicule.

### ARRIERE PLAN TECHNOLOGIQUE DE L'INVENTION

Il est de plus en plus commun d'équiper des véhicules, notamment des véhicules automobiles, de dispositifs de prise de vue. Il peut ainsi s'agir d'une caméra de recul intégrée à la porte de coffre arrière du véhicule ou à son bouclier, ou intégrée dans un rétroviseur extérieur pour fournir des images latérales arrières de l'environnement. Le document EP3149433 propose un agencement de montage d'un tel dispositif. Il peut également s'agir d'un dispositif laser de télédétection (généralement désigné par l'acronyme « LIDAR ») ou d'un capteur d'images infrarouges.

Dans le document US2019028618, on décrit un dispositif de prise de vue destiné à équiper un véhicule automobile. Ce dispositif est fourni sous forme modulaire et compact pour s'intégrer à tout type d'éléments de carrosserie. Le dispositif modulaire est constitué d'un boîtier en plastique retenant une optique. Le boîtier comprend et protège un capteur d'images en électronique intégrée disposé sur un circuit imprimé, en vis-à-vis de l'optique. Le boîtier est refermé par un capot portant un connecteur électrique. Ce connecteur est électriquement relié au circuit imprimé et peut répondre à un standard de connexion, par exemple FAKRA, facilitant son raccordement électrique à un calculateur du véhicule, par l'intermédiaire d'un câble de raccordement standard.

L'optique d'un dispositif de prise de vue, tel que ceux décrits dans les documents précédents, est susceptible d'être souillée par la pluie, des éclaboussures ou de la poussière ce qui conduit à dégrader la qualité des images fournies et ce qui peut poser des problèmes de sécurité. Pour résoudre ce problème, on a prévu de disposer sur le véhicule, et à proximité immédiate de l'optique du dispositif de prise de vue, un dispositif de projection d'un fluide de nettoyage. En projetant ce fluide (un liquide ou de l'air comprimé) au besoin sur l'optique du dispositif de prise de vue, on cherche à éliminer les particules ou la matière qui obstrue l'optique pour retrouver une qualité d'image satisfaisante. Une telle solution est notamment décrite dans les documents WO2018043743, US20180345917 et EP2873571 dans lesquels le boîtier du dispositif de prise de vue et le dispositif de projection de fluide sont directement assemblés à un support.

### OBJET DE L'INVENTION

On cherche généralement à simplifier le montage des pièces composant un véhicule et notamment celles devant être disposées sur des éléments de carrosserie de ce véhicule. La présente invention vise à proposer un agencement facilitant le montage d'un système optique composé d'un dispositif de prise de vue et d'un dispositif de nettoyage de ce dispositif.

### BREVE DESCRIPTION DE L'INVENTION

En vue de la réalisation de ce but, l'objet de l'invention propose un agencement de montage selon la revendication 1.

Selon d'autres caractéristiques avantageuses et non limitatives de l'invention, prises seules ou selon toute combinaison techniquement réalisable :
- l'élément de logement présente une paroi latérale dans laquelle est aménagée au moins une languette flexible présentant une extrémité libre portant un cran, la languette flexible pouvant se déformer pour permettre l'introduction du dispositif optique de prise de vue dans l'élément de logement et refermer le cran sur celui-ci lorsqu'il est disposé en position de montage ;
- l'élément de logement et l'élément de maintien sont constitutif d'un même corps principal ;
- l'élément de fixation est porté par une pièce intermédiaire fixée de manière réversible au corps principal ;
- la pièce intermédiaire comprend deux parties reliées par un anneau de liaison, chaque partie étant configurée pour coulisser dans un rail d'assemblage aménagé sur le corps principal ;
- l'élément de fixation et l'élément de maintien sont portés par une pièce intermédiaire fixée de manière réversible à l'élément de logement ;
- la pièce intermédiaire est fixée de manière irréversible à l'élément de carrosserie ;
- l'élément de fixation comprend une pluralité d'agrafes métalliques configurées pour coopérer avec des éléments de retenus aménagés sur l'élément de carrosserie du véhicule ;
- l'élément de fixation comprend une matière adhésive disposée sur la pièce intermédiaire ;
- la pièce intermédiaire comprend des éléments d'ajustement de la position angulaire de l'élément de logement ;
- l'élément de logement et l'élément de fixation sont reliés par l'intermédiaire d'une charnière ;
- l'agencement de montage comprend un dispositif démontable de réglage pour orienter l'élément de logement vis-à-vis de l'élément de fixation selon un angle déterminé ;
- l'élément de logement est muni d'une interface électrique configurée pour se coupler à un connecteur électrique du dispositif de prise de vue lorsque celui-ci est retenu en position de montage ;
- l'élément de logement présente un fond et l'interface électrique comprend un connecteur disposé sur le fond de l'élément de logement

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
[Fig. 1b]
[Fig. 1c]
[Fig. 1d]

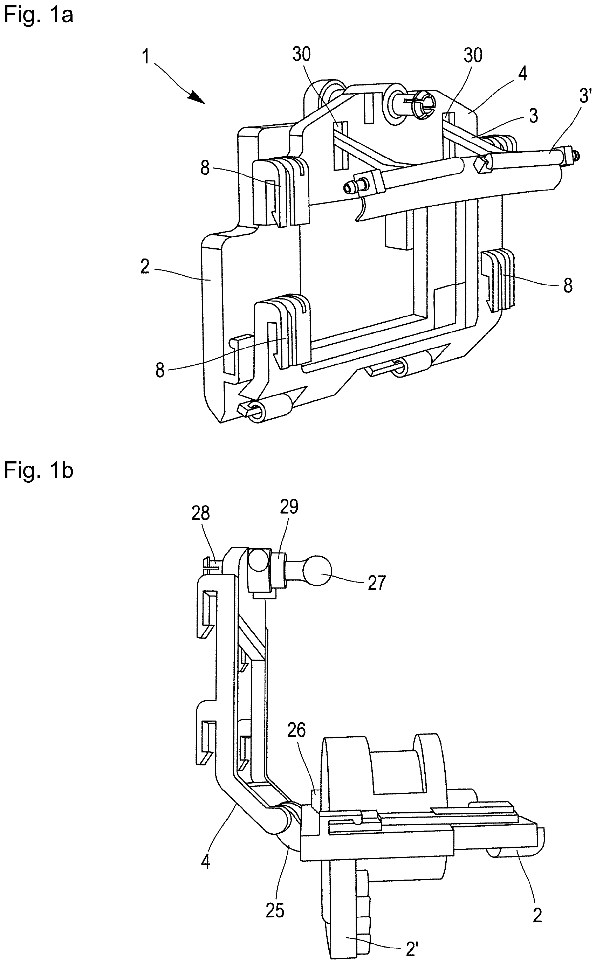

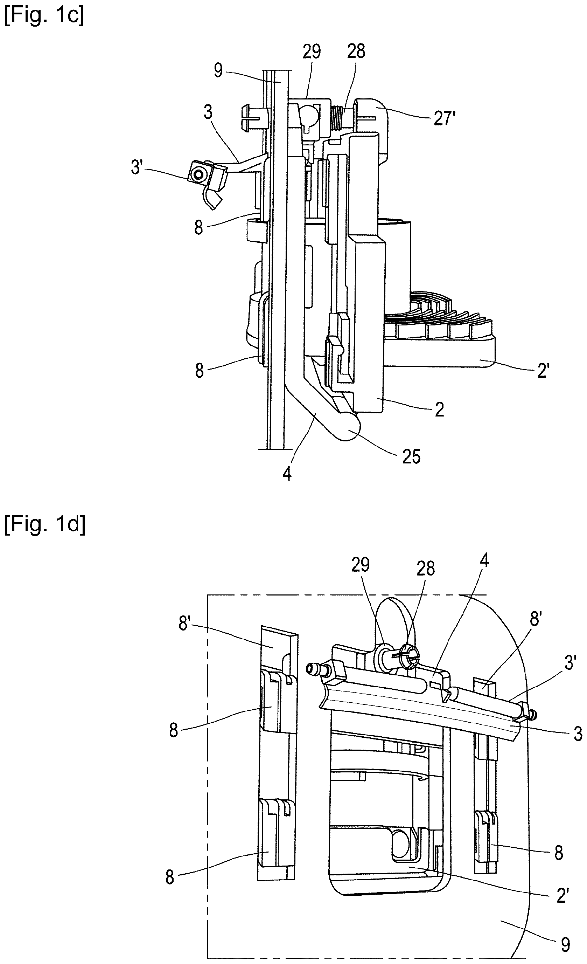

Les figures 1a à 1d représentent un agencement de montage conforme à un premier mode de mise en oeuvre ;
[Fig. 2a]
[Fig. 2b]
[Fig. 2c]
[Fig. 2d]

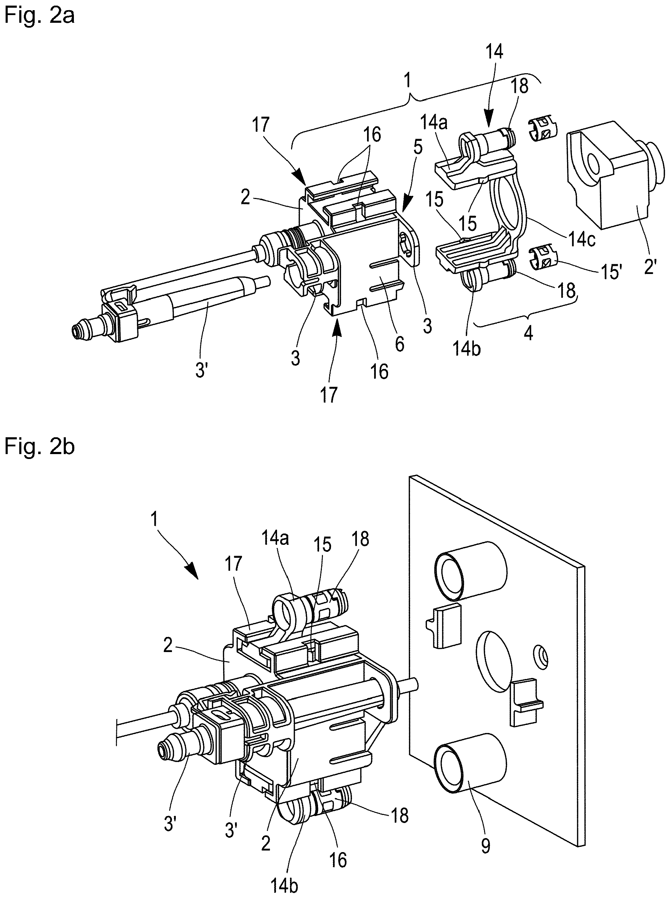

les figures 2a à 2d représentent un agencement de montage conforme à un autre mode de mise en oeuvre ;
[Fig. 3a]
[Fig. 3b]
[Fig. 3c]
[Fig. 3d]

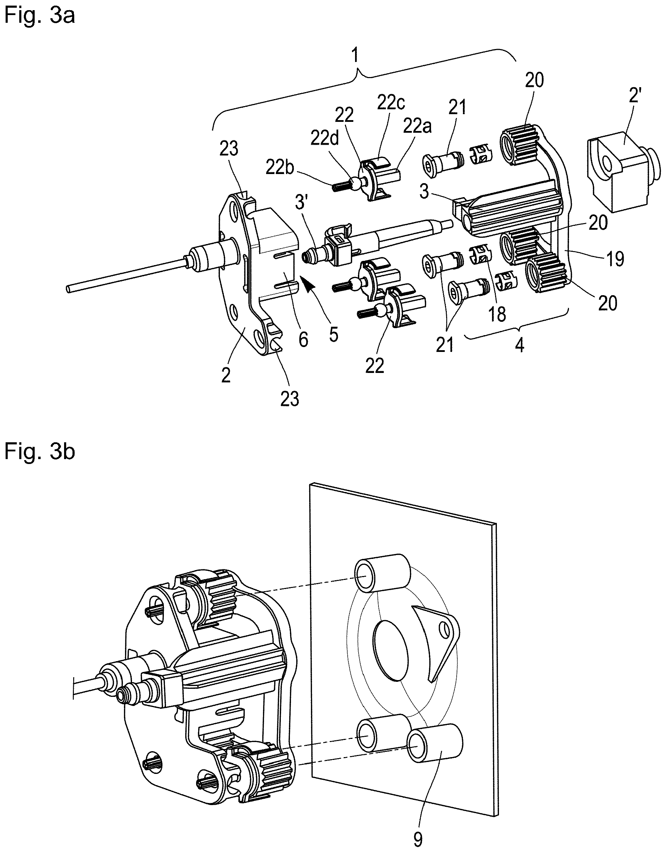

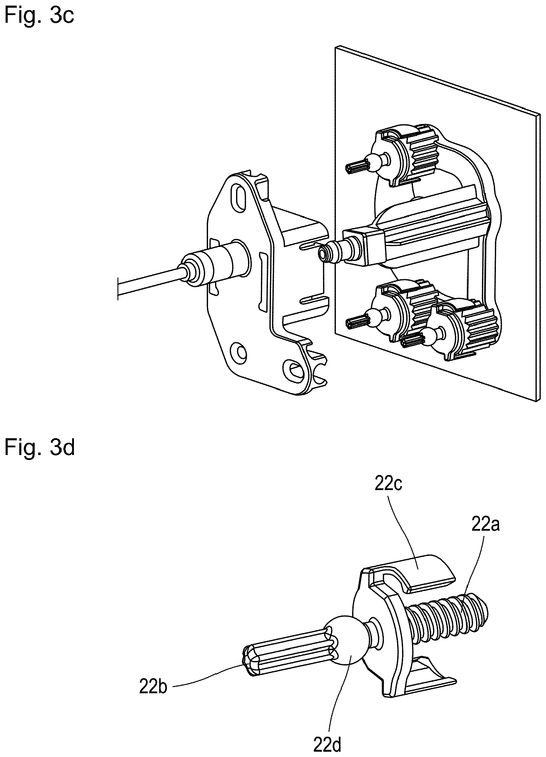

les figures 3a à 3d représentent un agencement de montage conforme à encore un autre mode de mise en oeuvre ;
[Fig. 4]

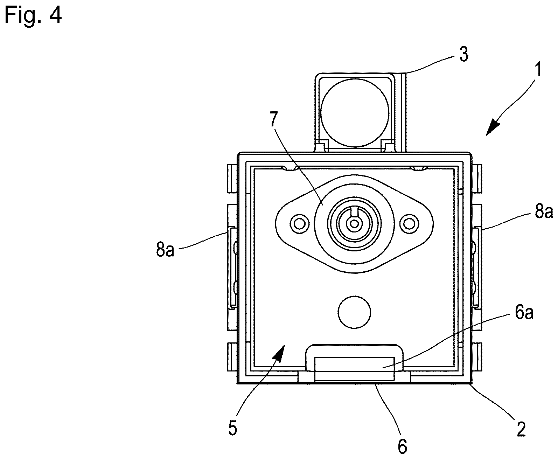

la figure 4 représente une vue de face d'un corps principal formé d'un élément de logement et d'un élément de maintien.

### DESCRIPTION DETAILLEE DE L'INVENTION

Dans la suite de cette description, on désignera par « système optique », l'ensemble constitué d'un dispositif de prise de vue 2' et d'un dispositif de projection de fluide 3' que l'on cherche à assembler à un élément de carrosserie d'un véhicule. Et par « dispositif de prise de vue » on entend tout dispositif apte à former une représentation de l'environnement du véhicule, il peut notamment s'agir d'un capteur d'images dans le domaine du visible, ou dans l'infrarouge, ou dans tout autre gamme de longueur d'onde. Il peut également s'agir d'un dispositif à base de laser, comme un LIDAR, comme cela a été déjà précisé en introduction de cette demande. Dans tous les cas, le dispositif de prise de vue comprend un boîtier, par exemple en plastique, retenant une optique. Le boîtier comprend et protège le capteur disposé sur un circuit imprimé, en vis-à-vis de l'optique. Le boîtier est refermé par un capot portant un connecteur électrique. Ce connecteur est électriquement relié au circuit imprimé.

Dans l'approche retenue, le système optique peut être pré-monté sur un agencement 1 afin de faciliter son assemblage à l'élément de carrosserie. A cet effet, l'élément de carrosserie est muni d'une ouverture principale configurée pour recevoir l'optique du dispositif de prise de vue 2'. Il peut également être muni d'une autre ouverture pour recevoir une buse du dispositif de projection 3' lorsque celle-ci ne peut être disposée dans l'ouverture principale.

D'une manière très générale, et en référence aux figures, un agencement de montage 1 du système optique conforme aux différents modes de mises en oeuvre composant la présente description comprend :
- un élément de logement 2 pour retenir un dispositif optique de prise de vue 2';
- un élément de maintien 3 d'un dispositif de projection de fluide 3';
- un élément de fixation 4 sur lequel sont montés l'élément de logement 2 et de l'élément de maintien 3 , l'élément de fixation étant destiné à être fixé à un élément de carrosserie d'un véhicule.

Le dispositif de prise de vue 2' peut être fixé par tout moyen à l'élément de logement 2, par exemple par clipsage, encliquetage, emboitage élastique, par agrafage ou par vissage, afin de le retenir dans cette position de montage. On peut prévoir à cet effet que le boîtier du dispositif de prise de vue soit muni de moyens facilitants ou permettant sa fixation à l'élément de logement 2.

Dans certains modes de mise en oeuvre, représentés par exemple sur les figures 2a, 3a ou 4, l'élément de logement 2 est formé de parois latérales définissant un logement 5 dans lequel le dispositif de prise de vue 2' peut être placé, en position de montage. L'élément de logement 2 de ces modes de mise en oeuvre peut présenter une languette flexible 6 aménagée sur une des parois latérales du logement 5. La languette flexible 6 porte un cran 6a à son extrémité libre, le cran étant orienté vers l'intérieur du logement 5. La languette flexible 6 peut se déformer vers l'extérieur du logement pour permettre l'introduction du dispositif de prise de vue 2' dans le logement 5 et se refermer sur celui-ci lorsqu'il est disposé en position de montage. Dans cette position, on peut prévoir qu'un connecteur électrique du dispositif optique prise de vue 2' soit couplé à une interface électrique 7 dont peut être muni l'élément de logement 2.

Lorsqu'une telle interface électrique 7 est prévue dans l'élément de logement 2, et comme cela est visible sur la figure 4, elle présente un premier côté, émergeant à l'intérieur du logement 5, permettant de le raccorder au connecteur électrique du dispositif de prise de vue 2' lorsque celui-ci est retenu par l'élément de logement 2. L'interface électrique 7 peut comprendre un connecteur disposé sur une paroi formant le fond du logement 2. L'interface électrique 7 comprend également un second côté, émergeant à l'extérieur du logement 5, permettant son raccordement à des câbles de connexion, afin de relier électriquement le dispositif de prise de vue 2' à un calculateur du véhicule. Le premier et le second côté de l'interface électrique 7 peuvent répondre à différents standards, par exemple au standard FAKRA. La liaison entre l'interface électrique 7 et l'élément de logement 2 peut être étanche. L'interface électrique 7 peut comprendre une section de câble, dont l'extrémité peut être munie d'un connecteur, afin de faciliter le câblage du véhicule, notamment lorsque le système optique doit être positionnée dans un endroit peu accessible du véhicule.

Lorsque l'élément de logement 2 ne prévoit aucune interface électrique 7, on prévoira d'aménager un passage permettant d'introduire un câble de raccordement directement enfichable à un connecteur électrique du dispositif de prise de vue 2', afin de permettre le raccordement électrique de ce dispositif à un calculateur du véhicule. Il n'est pas nécessaire que le boîtier du dispositif de prise de vue 2' présente un connecteur électrique, et le dispositif peut comprendre un câble de raccordement directement relié au circuit imprimé portant le capteur. Dans ce cas également, il est possible de faire passer le câble de raccordement dans le passage de l'élément de logement 2 dans une étape de préparation du dispositif de montage 1.

L'élément de maintien 3 vise à retenir le dispositif de projection de fluide 3' dans une position fonctionnelle vis-à-vis du dispositif de prise de vue 2', lorsque celui-ci est en position de montage. Le dispositif de projection de fluide 3' présente une extrémité de raccordement à un conduit pour amener le fluide, et une autre extrémité ou une autre partie formant une buse de projection du fluide. Dans la position fonctionnelle, le fluide est effectivement et précisément projeté par la buse sur l'optique du dispositif de prise de vue 2'. L'élément de maintien 3 est apte à retenir fixement le dispositif de projection 3' dans sa position fonctionnelle. Ils peuvent notamment se fixer l'un à l'autre par clipsage.

Dans certains modes de mise en oeuvre, l'élément de logement 2 et l'élément de maintien 3 sont solidaires l'un de l'autre. Ils peuvent être constitutifs d'un même corps principal de l'agencement de montage 1. Un tel corps principal est notamment représenté sur la figure 4, à titre d'illustration. Ce corps principal peut-être en matière plastique. Dans une variante de ces modes de mise en oeuvre, on pourrait envisager de former l'élément de logement 2 et l'élément de maintien 3 en deux pièces séparées mais rendues solidaires l'une de l'autre, sans aucun degré de liberté, pour former le corps principal.

Pour assembler le système optique à un élément de carrosserie d'un véhicule, l'agencement de montage 1 prévoit également un élément de fixation 4. Cet élément 4 est destiné à recevoir l'élément de logement 2 et l'élément de maintien 3 de sorte que le dispositif de projection de fluide 3' soit disposé dans une position fonctionnelle vis-à-vis du dispositif de prise de vue 2' lorsque celui-ci est en position de montage. Cet élément de fixation 4 peut prendre de nombreuses formes comme cela sera présenté dans les différents modes de mise en oeuvre de la présente description.

L'élément de fixation 4 est configuré pour assembler l'agencement de montage 1 très simplement sur l'élément de carrosserie, par exemple par clipsage, encliquetage, emboitage élastique ou par agrafage. Cet assemblage peut être réversible ou irréversible, c'est à dire qu'une partie au moins de l'agencement 1 est retenu à l'élément de carrosserie par l'élément de fixation 4 sans moyens aisés de démontage.

On comprend que l'assemblage du système optique à l'élément de carrosserie est particulièrement facilité par l'agencement 1 proposé. On peut effectivement livrer l'agencement de montage 1 pré-monté, c'est à dire préalablement équipé, par exemple par clipsage ou par vissage, du dispositif de prise de vue 2' et du dispositif de projection 3'. L'ensemble pré-monté peut être assemblé sur l'élément de carrosserie en une seule opération manuelle, par exemple par encliquetage sur cet élément de carrosserie. Un fois monté, le dispositif de prise de vue 2' peut être relié à un calculateur du véhicule par simple raccordement par câble de l'interface électrique 7 de l'élément de logement 2 ou du connecteur électrique du dispositif de prise de vue 2'. Le dispositif de projection 3' est quant à lui relié, du côté de son extrémité de raccordement, à un conduit de distribution de fluide.

Les figures 1a à 1d représentent un premier mode de mise en oeuvre d'un agencement de montage 1 conforme à la présente description. L'élément de fixation 4 est ici formé d'un cadre. L'ouverture central du cadre permet de faire déboucher l'optique du dispositif de prise de vue. La face du cadre destiné à être positionné contre l'élément de carrosserie 9 porte une pluralité de pattes flexibles 8 dont les extrémités portent respectivement des crans de maintien.

L'élément de carrosserie 9 est quant à lui muni d'ouvertures 8' agencées pour être mises en correspondance avec les pattes flexibles 8 de l'élément de fixation 4. Ces ouvertures sont traversées de longerons sur lesquels les crans de maintien peuvent se refermer et ainsi permettre la fixation de l'élément de fixation 4 à l'élément de carrosserie 9.

Dans ce mode de mise en oeuvre, l'élément de logement 2 est également constitué d'un cadre, relié au cadre formant l'élément de fixation 4 par une liaison charnière 25 s'étendant sur un coté respectif de chaque cadre. Lorsque les deux cadres sont éloignés l'un de l'autre, par rotation de la charnière 25 comme cela est représenté sur la figure 1b, le dispositif de prise de vue 2' peut être logé dans l'ouverture central du cadre formant l'élément de logement 2. Des extensions latérales du boîtier du dispositif de prise de vue 2' peuvent reposer sur certains des côtés du cadre constituant l'élément de logement 2 afin de permettre de les fixer l'un à l'autre. On peut ainsi visser l'élément de logement 2 sur le cadre ou, comme cela est représenté sur la figure 1b, clipser le dispositif de prise de vue 2' à des pattes flexibles 26 disposées sur au moins un des côtés de l'élément de logement 2.

Après cette étape de mise en place de l'élément de prise de vue 2' dans l'élément de logement 2, on peut à nouveau actionner la charnière 25 pour refermer l'élément de logement 2 sur l'élément de fixation 4. Dans cette position refermée, l'optique du dispositif de prise de vue 2' débouche du cadre formant l'élément de fixation 4 pour s'engager dans, ou être disposé en vis-à-vis de, l'ouverture aménagée de l'élément de carrosserie 9.

L'élément de fixation 4 porte une sphère 27, ici sur le côté du cadre opposé au côté sur lequel est réalisé la charnière 25. La sphère 27 est destinée à s'encliqueter et à se loger dans une pièce d'accueil 27' flexible de l'élément de logement 2, afin de maintenir ces deux pièces l'une à l'autre en position refermée de la charnière 25. La force de maintien de la sphère 27 dans la pièce d'accueil 27' est telle que lorsque l'agencement de montage 1 reçoit un choc frontal important, c'est à dire dirigé perpendiculairement au plan défini par le cadre de l'élément de fixation 4, la sphère 27 peut se déloger de la pièce d'accueil autorisant la rotation de la charnière 25 et le positionnement en retrait de l'élément de prise de vue 2'. On limite ainsi les risques d'endommagement de ce dispositif lorsque le véhicule sur lequel est placé l'agencement de montage 1 subit un accident.

La sphère 27 est apte à tourner en rotation dans la pièce d'accueil 27'. Elle est placée à l'extrémité d'une vis de réglage 28 traversant une noix filetée 29 portée par l'élément de fixation 4. L'extrémité libre de cette vis 28, c'est à dire l'extrémité ne portant pas la sphère 27, est conformée pour être manipulable par un outil. En entraînant en rotation la vis de réglage 28, on déplace en translation la sphère 27 selon l'axe de la vis de réglage 28, et on déplace angulairement l'élément de logement 2 vis-à-vis de l'élément de fixation 4 par rotation autour de la charnière 25.

Ce mécanisme permet d'ajuster la position du dispositif de prise de vue 2' et ce qui rend ce mode de mise en oeuvre particulièrement intéressant. Bien entendu, l'élément de carrosserie 9 présente une ouverture principale conformée pour rendre accessible l'extrémité libre de la vis de réglage 28.

La sphère 27, pièce d'accueil 27' flexible et la vis de réglage 28 forment ainsi un dispositif de réglage démontable pour orienter l'élément de logement 2 (et donc le dispositif de prise de vue 2') vis-à-vis de l'élément de fixation 4 selon un angle déterminé.

L'élément de maintien 3 de ce mode de mise en oeuvre est constitué d'un bras transversal portant également des pattes flexibles configurées pour s'engager sur des encoches 30 formées sur un coté supérieur du cadre formant l'élément de fixation 4. Le bras porte ici deux conduits, formant le dispositif de projection de fluide 3', chaque conduit étant muni dans leurs longueurs d'une pluralité de perçages orientés vers l'intérieur du cadre destiné à recevoir l'optique du dispositif de prise de vue 2'. Ces perçages forment des buses permettant de projeter un fluide en direction de cette optique pour en nettoyer la surface. Les conduits présentent une première extrémité close, et une seconde extrémité qui peut être reliée à des conduits de distribution de fluide du véhicule.

Lorsque le bras formant l'élément de maintien 3 présente une dimension transversale plus importante que la dimension de l'ouverture de l'élément de carrosserie, cet élément de maintien 3 est rendu solidaire de la pièce de fixation 4, après que celle-ci ait été fixée à l'élément de carrosserie 9. Mais préférentiellement, on ajustera la dimension transversale du bras pour qu'elle soit plus petite que cette ouverture, et pour que l'agencement de montage 1 puisse être fixé entièrement prémontré sur l'élément de carrosserie 9.

Les figures 2a à 2d représentent un agencement de montage 1 conforme à un autre mode de mise en oeuvre. Dans ce mode de mise en oeuvre l'élément de logement 2 est solidaire de l'élément de maintien 3 et ils constituent ensemble un corps principal. L'élément de fixation 4 comprend ici une pièce intermédiaire 14 fixée de manière réversible au corps principal. Sur l'exemple représenté de la figure 2a, cette pièce intermédiaire est formée de deux parties 14a, 14b reliées entre elles par un anneau de liaison 14c et disposées de part et d'autre de cet anneau 14c. L'anneau de liaison 14c évite de masquer l'optique du dispositif de prise de vue 2' quand celui-ci est placé en position de montage dans l'élément de logement 2.

Les surfaces externes de deux parois opposées de l'élément de logement 2 portent des rails 17 dans lesquelles les deux parties 14a, 14b de la pièce intermédiaire 14 peuvent coulisser. Ces rails 17 peuvent présenter des ouvertures latérales 16 dans lesquelles des ergots 15 placés latéralement sur les parties 14a, 14b peuvent s'engager afin d'assembler la pièce intermédiaire 14 au corps principal et de fixer leur position relative.

La pièce intermédiaire 14 est munie de deux pieds 18 respectivement portés par les deux parties 14a, 14b, chaque pied 18 recevant une agrafe métallique 15' en forme de bague. Ces agrafes en forme de bagues 15', une fois positionnées fixement sur les pieds 18, sont configurées pour coopérer avec des éléments de retenue 9 aménagés sur l'élément de carrosserie du véhicule, de manière à fixer de manière non réversible la pièce intermédiaire 14 à cet élément. Comme cela est bien connu en soi, chaque agrafe métallique 15' peut comprendre une griffe saillante qui peut être introduite dans l'élément de retenue 9 mais qui bloque son extraction.

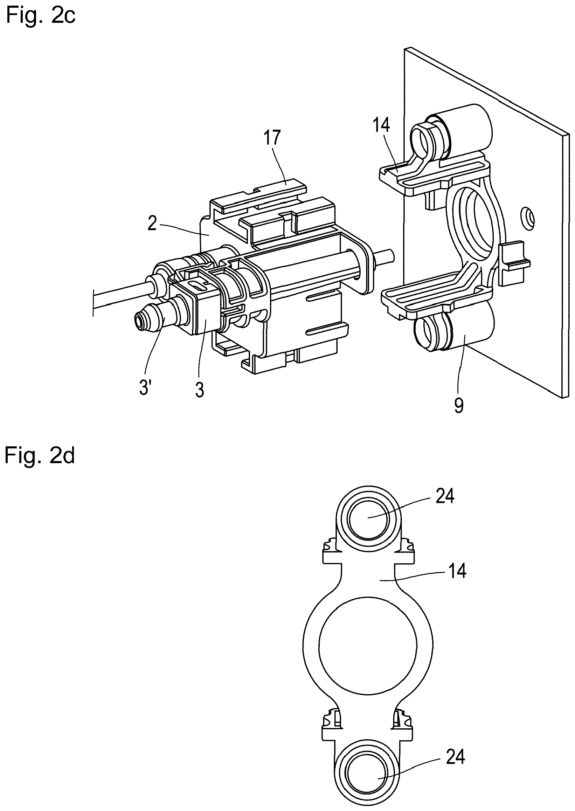

L'agencement de montage 1, selon ce mode de mise en oeuvre, peut être originellement livré pré-monté, c'est-à-dire en ayant probablement fixé le dispositif de nettoyage 3' et le dispositif de prise de vue 2' sur le corps principal et en ayant placé la pièce intermédiaire 14 munis des agrafes 15' métalliques sur le corps principal. Cet ensemble peut être monté en une seule étape sur l'élément de carrosserie en l'agrafant aux éléments de retenue 9 du véhicule (figure 2b). S'il est nécessaire de démonter le système optique, on peut faire glisser le corps principal pour le séparer de la pièce intermédiaire 14 par l'intermédiaire des rails 17. La pièce intermédiaire 14 reste quant à elle fixée de manière irréversible à l'élément de carrosserie (figure 2c).

Dans une variante représentée sur la figure 2d de ce mode de mise en oeuvre, l'élément de fixation 4 peut être formé d'une matière adhésive 24 disposée sur la pièce intermédiaire 14, cette matière adhésive 24 pouvant par exemple être activée par échauffement afin de fixer la pièce intermédiaire 14 de manière irréversible à l'élément de carrosserie.

Les figures 3a à 3d représentent un agencement de montage 1 conforme à un autre mode de mise en oeuvre. Dans ce mode mis en oeuvre, l'élément de fixation 4 et l'élément de maintien 3 sont tous deux portés par une pièce intermédiaire 19, cette pièce intermédiaire 19 étant fixée de manière réversible à l'élément de logement 2 et de manière irréversible à un élément de retenu 9 de l'élément de carrosserie.

Dans ce mode de mise en oeuvre, la position angulaire relative de l'élément de logement 2 peut être ajustée vis-à-vis de la pièce intermédiaire 19. On peut donc régler avec précision, après le montage de l'agencement de montage 1, l'orientation de l'optique du dispositif de prise de vue 2', ce qui peut être important lorsque le champ optique est relativement étroit comme cela peut être le cas des dispositifs de type LIDAR.

La pièce intermédiaire 19 porte trois roues crantés 20, chaque roue 20 présentant un alésage central. Ces alésages sont configurés pour recevoir des inserts 21, par exemple des inserts plastiques, portant sur leur surface extérieure des agrafes métalliques 18 en forme de bague. Ces inserts 21 présentent également un évidemment axial portant un filetage interne. Les extrémités des inserts 21 qui émergent des roues crantées 20 sont introduits dans des éléments de retenue 9 de l'élément de carrosserie pour y fixer de manière irréversible la pièce intermédiaire 19 portant l'élément de maintien 3 et le dispositif de projection 3'. Dans une alternative, on pourrait également envisager de fixer la pièce intermédiaire 19 à l'élément de carrosserie par l'intermédiaire d'une matière adhésive. Dans ce cas, les inserts 21 ne seraient pas nécessaires, et on ferait porter le filetage interne par l'alésage central des roues 20.

L'élément de logement 2 est quant à lui couplé de manière réversible à la pièce intermédiaire 19 par l'intermédiaire d'une pluralité de pièces rotulées 22, trois dans l'exemple représenté pour être respectivement associées aux roues crantées 20.

Chaque pièce rotulée 22, comme cela est bien visible sur la figure 3d, est formée d'un axe central dont une première extrémité 22a porte un filetage externe configuré pour coopérer avec le filetage interne de l'évidement axial d'un insert 21. Une partie flexible 22c de la pièce rotulée 22 coopère avec les crans d'une roue 20 pour permettre d'indexer la position angulaire de la pièce rotulée 22 par rapport à la roue 20, et donc à la progression par vissage de la pièce rotulée 22 dans l'insert 21. L'autre extrémité 22b de l'axe central pénètre dans une ouverture aménagée sur l'élément de logement 2. L'ouverture rend accessible depuis l'extérieur l'extrémité 22b de l'axe qui peut être conformé pour être manipulable en rotation par un outil. L'axe central porte également une rotule sphérique 22d qui est configurée pour se clipser dans un logement de clipsage 23 de l'élément de logement 2, pour solidariser cet élément de logement aux pièces rotulées 22 et donc à l'élément intermédiaire 19.

On peut ainsi entraîner en rotation les pièces rotulées 22 dont le mouvement et la position angulaire est indexée par la partie flexible 22c se logeant dans les crans des roues 20. La progression par vissage d'une pièce rotulée 22 dans un insert 21, entraine le déplacement de l'élément de logement 2 par rotation autour d'un axe passant par les deux autres pièces rotulées 22. Avantageusement, on disposera les trois roues crantées 20, dont les alésages centraux définissent trois points de fixation de l'élément de logement 2, à la surface de la pièce intermédiaire 19 pour qu'elles forment un triangle rectangle. La roue crantée 20 et la pièce rotulée 22 disposées à l'angle droit de ce triangle constitue un point de fixation pivot, les deux autres couples roue crantée - pièce rotulée permettant alors d'orienter angulairement et respectivement l'élément de logement 2 (et donc le dispositif de prise de vue 2') selon deux axes perpendiculaires l'un à l'autre.

On note que ces éléments d'ajustement de la position angulaire de l'élément de logement 2 sont tout à fait compatible avec le mode de mise en oeuvre précédent dans lequel l'élément de logement 2 et l'élément de maintien 3, solidaires l'un de l'autre, étaient associés à une pièce intermédiaire 14.

Bien entendu l'invention n'est pas limitée aux modes de mise en oeuvre décrits et on peut y apporter des variantes de réalisation sans sortir du cadre de l'invention tel que défini par les revendications.

## Revendications

1. Agencement de montage (1) d'un système optique sur un élément de carrosserie d'un véhicule, le système optique comprenant un dispositif de prise de vue (2') comprenant un boîtier et un dispositif de projection d'un fluide (3') de nettoyage du dispositif de prise de vue (2'), le dispositif de prise de vue comprenant un boîtier retenant une optique, le boîtier comprenant et protègeant un capteur disposé sur un circuit imprimé et portant un connecteur électrique électriquement relié au circuit imprimé, l'agencement de montage (1) comprenant :
- un élément de logement (2) orientable pour placer et retenir le boîtier du dispositif de prise de vue (2') en position de montage ;
- un élément de maintien (3) du dispositif de projection de fluide (3') ;
- un élément de fixation (4) sur lequel sont montés l'élément de logement (2) et l'élément de maintien (3) de sorte que le dispositif de projection de fluide (3') soit disposé dans une position fonctionnelle vis-à-vis du dispositif de prise de vue (2') lorsque celui-ci est en position de montage, l'élément de fixation (4) étant destiné à être fixé à l'élément de carrosserie du véhicule.

2. Agencement de montage (1) selon la revendication précédente dans lequel l'élément de logement (2) présente une paroi latérale dans laquelle est aménagée au moins une languette flexible (6) présentant une extrémité libre portant un cran (6a), la languette flexible (6) pouvant se déformer pour permettre l'introduction du dispositif optique de prise de vue (2') dans l'élément de logement (2) et refermer le cran (6a) sur celui-ci lorsqu'il est disposé en position de montage.

3. Agencement de montage (1) selon l'une des revendications précédentes dans lequel l'élément de logement (2) et l'élément de maintien (3) sont constitutif d'un même corps principal.

4. Agencement de montage (1) selon la revendication 3 dans lequel l'élément de fixation (4) est porté par une pièce intermédiaire (14) fixée de manière réversible au corps principal.

5. Agencement de montage (1) selon la revendication précédente dans lequel la pièce intermédiaire (14) comprend deux parties (14a, 14b) reliées par un anneau de liaison (14c), chaque partie étant configurée pour coulisser dans un rail d'assemblage (17) aménagé sur le corps principal.

6. Agencement de montage (1) selon l'une des revendications 1 à 2 dans lequel l'élément de fixation (4) et l'élément de maintien (3) sont portés par une pièce intermédiaire (19) fixée de manière réversible à l'élément de logement (2).

7. Agencement de montage (1) selon l'une des revendications 4 et 6 dans lequel la pièce intermédiaire (14, 19) est fixée de manière irréversible à l'élément de carrosserie.

8. Agencement de montage (1) selon la revendication précédente dans lequel l'élément de fixation (4) comprend une pluralité d'agrafes métalliques (15') configurées pour coopérer avec des éléments de retenus (9) aménagés sur l'élément de carrosserie du véhicule.

9. Agencement de montage (1) selon la revendication 7 dans lequel l'élément de fixation (4) comprend une matière adhésive (24) disposée sur la pièce intermédiaire (14,19).

10. Agencement de montage (1) selon l'une des revendications 4 à 9 dans lequel la pièce intermédiaire (14, 19) comprend des éléments d'ajustement de la position angulaire de l'élément de logement (2).

11. Agencement de montage (1) selon la revendication 1 ou 2, dans lequel l'élément de logement (2) et l'élément de fixation (4) sont reliés par l'intermédiaire d'une charnière (25).

12. Agencement de montage (1) selon la revendication précédente comprenant un dispositif démontable de réglage pour orienter l'élément de logement (2) vis-à-vis de l'élément de fixation (4) selon un angle déterminé.

13. Agencement de montage (1) selon l'une des revendications précédentes dans lequel l'élément de logement (2) est muni d'une interface électrique (7) configurée pour se coupler à un connecteur électrique du dispositif de prise de vue (2') lorsque celui-ci est retenu en position de montage.

14. Agencement de montage (1) selon la revendication précédente dans lequel l'élément de logement (2) présente un fond et l'interface électrique (7) comprend un connecteur disposé sur le fond de l'élément de logement (2) .

## Patentansprüche

1. Anordnung (1) zum Montieren eines optischen Systems an einem Karosserieelement eines Fahrzeugs, das optische System umfassend eine Bildaufnahmevorrichtung (2'), umfassend ein Gehäuse und eine Vorrichtung (3') zum Verspritzen eines Fluids zum Reinigen der Bildaufnahmevorrichtung (2'), die Bildaufnahmevorrichtung umfassend ein Gehäuse, das ein optisches Instrument festhält, wobei das Gehäuse einen Sensor umfasst und schützt, der auf einer gedruckten Schaltung angeordnet ist und einen elektrischen Verbinder trägt, der mit der gedruckten Schaltung elektrisch verbunden ist, die Montageanordnung (1) umfassend:
- ein Aufnahmeelement (2), das zum Platzieren und Festhalten des Gehäuses der Bildaufnahmevorrichtung (2') in einer Montageposition verstellbar ist;
- ein Halteelement (3) der Vorrichtung (3') zum Verspritzen von Fluid;
- ein Befestigungselement (4), auf dem das Aufnahmeelement (2) und das Halteelement (3) montiert sind, sodass die Vorrichtung (3') zum Verspritzen von Fluid in einer Betriebsposition gegenüber der Bildaufnahmevorrichtung (2') angeordnet ist, wenn diese in der Montageposition ist, wobei das Befestigungselement (4) dafür bestimmt ist, an dem Karosserieelement des Fahrzeugs befestigt zu werden.

2. Montageanordnung (1) nach dem vorstehenden Anspruch, wobei das Aufnahmeelement (2) eine Seitenwand vorweist, in der mindestens eine flexible Lasche (6) eingerichtet ist, die ein freies Ende vorweist, das eine Einkerbung (6a) trägt, wobei sich die flexible Lasche (6) zum Ermöglichen der Einführung der optischen Bildaufnahmevorrichtung (2') in das Aufnahmeelement (2) und Verschließen der Einkerbung (6a) auf diesem verformen kann, wenn sie in der Montageposition angeordnet ist.

3. Montageanordnung (1) nach einem der vorstehenden Ansprüche, wobei das Aufnahmeelement (2) und das Halteelement (3) Bestandteil eines gleichen Hauptkörpers sind.

4. Montageanordnung (1) nach Anspruch 3, wobei das Befestigungselement (4) durch ein Zwischenstück (14) getragen wird, das an dem Hauptkörper reversibel befestigt ist.

5. Montageanordnung (1) nach dem vorstehenden Anspruch, wobei das Zwischenstück (14) zwei Teile (14a, 14b) umfasst, die durch einen Verbindungsring (14c) verbunden sind, wobei jeder Abschnitt zum Gleiten in einer Zusammensetzungsschiene (17) konfiguriert ist, die an dem Hauptkörper eingerichtet ist.

6. Montageanordnung (1) nach einem der Ansprüche 1 bis 2, wobei das Befestigungselement (4) und das Halteelement (3) durch ein Zwischenstück (19) getragen werden, das an dem Aufnahmeelement (2) reversibel befestigt ist.

7. Montageanordnung (1) nach einem der Ansprüche 4 und 6, wobei das Zwischenstück (14, 19) an dem Karosserieelement irreversibel befestigt ist.

8. Montageanordnung (1) nach dem vorstehenden Anspruch, wobei das Befestigungselement (4) eine Vielzahl von Metallklammern (15') umfasst, die zum Zusammenwirken mit Festhalteelementen (9) konfiguriert sind, die an dem Karosserieelement des Fahrzeugs eingerichtet sind.

9. Montageanordnung (1) nach Anspruch 7, wobei das Befestigungselement (4) ein Klebematerial (24) umfasst, das auf dem Zwischenstück (14,19) angeordnet ist.

10. Montageanordnung (1) nach einem der Ansprüche 4 bis 9, wobei das Zwischenstück (14, 19) Elemente zum Anpassen der Winkelposition des Aufnahmeelements (2) umfasst.

11. Montageanordnung (1) nach Anspruch 1 oder 2, wobei das Aufnahmeelement (2) und das Befestigungselement (4) über ein Scharnier (25) verbunden sind.

12. Montageanordnung (1) nach dem vorstehenden Anspruch, umfassend eine abnehmbare Einstellvorrichtung zum Verstellen des Aufnahmeelements (2) gegenüber dem Befestigungselement (4) gemäß einem bestimmten Winkel.

13. Montageanordnung (1) nach einem der vorstehenden Ansprüche, wobei das Aufnahmeelement (2) mit einer elektrischen Schnittstelle (7) versehen ist, die zum sich Koppeln mit einem elektrischen Verbinder der Bildaufnahmevorrichtung (2') konfiguriert ist, wenn diese in der Montageposition festgehalten wird.

14. Montageanordnung (1) nach dem vorstehenden Anspruch, wobei das Aufnahmeelement (2) einen Boden vorweist und die elektrische Schnittstelle (7) einen Verbinder umfasst, der an dem Boden des Aufnahmeelements (2) angeordnet ist.

## Claims

1. Arrangement (1) for mounting an optical system on a body element of a vehicle, the optical system comprising an image capturing device (2') that comprises a case and a device for spraying a fluid (3') for cleaning the image capturing device (2'), the image capturing device comprising a case holding a lens, the case comprising and protecting a sensor arranged on a printed circuit and carrying an electrical connector electrically connected to the printed circuit, the mounting arrangement (1) comprising:
- an orientable housing element (2) for positioning and holding the case of the image capturing device (2') in the mounting position;
- an element (3) for holding the fluid spraying device (3');
- a fastening element (4) on which the housing element (2) and the holding element (3) are mounted so that the fluid spraying device (3') is arranged in a functional position with respect to the image capturing device (2') when said image-capturing device is in the mounting position, the fastening element (4) being intended to be fastened to the body element of the vehicle.

2. Mounting arrangement (1) according to the preceding claim, wherein the housing element (2) has a side wall in which at least one flexible tab (6) having a free end bearing a notch (6a) is arranged, the flexible tab (6) being able to deform to allow the introduction of the optical image capturing device (2') in the housing element (2) and to close the notch (6a) thereon when said device is arranged in the mounting position.

3. Mounting arrangement (1) according to one of the preceding claims, wherein the housing element (2) and the holding element (3) are part of the same main body.

4. Mounting arrangement (1) according to claim 3, wherein the fastening element (4) is carried by an intermediate part (14) reversibly fastened to the main body.

5. Mounting arrangement (1) according to the preceding claim, wherein the intermediate part (14) comprises two parts (14a, 14b) connected by a connecting ring (14c), each part being designed to slide in an assembly rail (17) provided on the main body.

6. Mounting arrangement (1) according to one of claims 1 to 2, wherein the fastening element (4) and the holding element (3) are carried by an intermediate part (19) reversibly fastened to the housing element (2).

7. Mounting arrangement (1) according to one of claims 4 and 6, wherein the intermediate part (14, 19) is irreversibly fastened to the body element.

8. Mounting arrangement (1) according to the preceding claim, wherein the fastening element (4) comprises a plurality of metal clips (15') designed to cooperate with holding elements (9) provided on the body element of the vehicle.

9. Mounting arrangement (1) according to claim 7, wherein the fastening element (4) comprises an adhesive material (24) arranged on the intermediate part (14, 19).

10. Mounting arrangement (1) according to one of claims 4 to 9, wherein the intermediate part (14, 19) comprises elements for adjusting the angular position of the housing element (2).

11. Mounting arrangement (1) according to claim 1 or 2, wherein the housing element (2) and the fastening element (4) are connected via a hinge (25).

12. Mounting arrangement (1) according to the preceding claim, comprising a removable adjustment device for orienting the housing element (2) with respect to the fastening element (4) at a specific angle.

13. Mounting arrangement (1) according to one of the preceding claims, wherein the housing element (2) is provided with an electrical interface (7) designed to couple with an electrical connector of the image capturing device (2') when said device is retained in the mounting position.

14. Mounting arrangement (1) according to the preceding claim, wherein the housing element (2) has a bottom and the electrical interface (7) comprises a connector arranged on the bottom of the housing element (2).
